Europäisches Patentamt

European Patent Office

Office européen des brevets

(19)

(11) Veröffentlichungsnummer : **0 114 244**
**B1**

(12) **EUROPÄISCHE PATENTSCHRIFT**

(45) Veröffentlichungstag der Patentschrift :
10.09.86

(21) Anmeldenummer : 83111685.0

(22) Anmeldetag : 23.11.83

(51) Int. Cl.⁴ : **H 02 G 15/08**, H 01 R   4/70,
H 01 R   9/05

(54) **Kabelverteiler, bzw. -abzweiger für Breitbandkommunikationskoaxialkabel.**

(30) Priorität : 18.01.83 DE 3301362

(43) Veröffentlichungstag der Anmeldung :
01.08.84 Patentblatt 84/31

(45) Bekanntmachung des Hinweises auf die Patenterteilung : 10.09.86 Patentblatt 86/37

(84) Benannte Vertragsstaaten :
AT BE CH DE FR GB LI NL

(56) Entgegenhaltungen :
EP-A- 0 051 109
DE-A- 3 124 374
DE-A- 3 127 869
GB-A- 2 088 147
US-A- 3 983 457

(73) Patentinhaber : ANT Nachrichtentechnik GmbH
Gerberstrasse 33
D-7150 Backnang (DE)

(72) Erfinder : Dyck, Claus
Im Heidewinkel 17
D-7150 Backnang (DE)

(74) Vertreter : Wiechmann, Manfred, Dipl.-Ing.
ANT Nachrichtentechnik GmbH Gerberstrasse 33
D-7150 Backnang (DE)

## Beschreibung

Die Erfindung betrifft einen Kabelverteiler, bzw. -abzweiger gemäß dem Oberbegriff des Patentanspruchs 1. Ein solcher Kabelverbinder, bzw. -abzweiger ist bekannt aus der DE-A-31 24 374.

Die Elektronikeinrichtungen von Kabelverteilern, bzw. -abzweigern für Breitbandkommunikationskabel sind zum Einbau in Schächte oder zur Erdverlegung von hochfrequenzdichten Gehäusen umgeben. Diese Gehäuse sind zum Schutz vor Feuchtigkeit von Thermoplastmuffen oder Schrumpfmuffen umschlossen, vgl. beispielsweise DE-A-30 40 864 A1. Aus Telefunken Jahrbuch 75/76 Weitverkehr und Kabeltechnik, Seite 59, Zeichnung « Verteiler- bzw. Abzweigmodul in hochfrequenzdichtem Gehäuse » und Seite 63, Zeichnung « Abzweiger in Schraubklemmuffe », geht hervor, die Innenleiter von Koaxialkabeln durch Schraubklemmelemente in den Gehäusen festzuschrauben und die Außenleiter über Schraubverbindungen oder Kabelschellen am Gehäuse zu befestigen. Diese Verschraubungen dienen neben der elektrischen Kontaktierung der Koaxialkabelleiter auch der Zugabfangung. Diese Art der Einführung der Kabelenden in das Gehäuse der Elektronikeinrichtungen erfordert einen hohen Arbeitsaufwand am Montageort. So müssen insbesondere die bereits fertig abgeglichenen Elektronikeinrichtungen zur Befestigung der Koaxialkabelleiter am Montageort geöffnet werden, was zu Verstimmungen führen kann. Auch kann durch unsachgemäßes Schließen des Gehäusedeckels zumindest die HF-Dichtigkeit gemindert werden.

Beim Verzweiger gemäß DE-A-31 24 374 erfolgt die Kontaktierung zwischen Koaxialkabelaußenleiter und Gehäuse durch spezielle Klammern, klemmende Krallen, Bördelränder, gewellte Ringe, o. ä. Diese Kontaktierungsmittel sind relativ starr und können u. U. die Koaxialkabel verletzen und deformieren, was die Hochfrequenzeigenschaften ungünstig beeinflußt. Zur Abdichtung gegen Längswanderung von Feuchtigkeit in den Verzweiger hinein wird der Kabelaußenmantel so abgesetzt, daß noch ein darunter liegender Teil des Außenleiters überschrumpft werden kann. Längswanderung von Feuchtigkeit innerhalb des Koaxialkabels, d. h. zwischen Dielektrikum und Außenleiter, sowie zwischen Dielektrikum und Innenleiter kann durch diese Maßnahme allein nicht verhindert werden.

Aus der DE-C-30 24 038, insbesondere Figur 3 ist es bekannt, dem Kabelverzweigergehäuse pro einzuführendem Kabel eine Einführungsklemmhülse zuzuordnen, deren Innendurchmesser im gespannten Zustand dem Durchmesser des Außenleiters des einzuführenden Koaxialkabels entspricht.

Außerdem ist es aus der US-A-3 983 457 bei Koaxialkabelverzweigern bekannt, auf der die elektrischen Baugruppen tragenden Leiterplatte in Achsrichtung der Kabeleinführungsöffnungen Federklemmtulpen zur Aufnahme der Koaxialkabelinnenleiter vorzusehen.

Die prioritätsgleiche europäische Anmeldung 83 111 684.3 (EP-4-114243) beschreibt ebenfalls einen Kabelverteiler, bzw. -abzweiger für Koaxialkabel, bei dem Baugruppen zur Signalverteilung in einem aus zwei metallischen Halbschalen bestehenden Gehäuse untergebracht sind, über das ebenso zie über die in das Gehäuse eingeführten Kabelenden eine bei Wärmeeinwirkung schrumpfende Umhüllung aufgebracht ist, wobei die Trennstelle zwischen den beiden Halbschalen die Kabeleinführungsöffnungen des Gehäuses jeweils halbiert, wobei die Halbschalen im Bereich der Kabeleinführungsöffnungen Mittel zur Kontaktierung der Koaxialkabelaußenleiter mit dem Gehäuse aufweisen, und wobei mindestens eine Abdichtung gegen Längswanderung von Feuchtigkeit in den Verzweiger hinein vorgesehen ist.

Dieser Kabelverteiler, bzw. -abzweiger ist dadurch gekennzeichnet, daß die Mittel zur Kontaktierung des Koaxialkabelaußenleiters mit federnden Zungen versehen Kontakt-Käfige sind, die sich im Bereich der Kabeleinführungsöffnungen in Ausnehmungen der Halbschalen befinden daß der die beiden Halbschalen umgebende Teil der bei Wärmeeinwirkung schrumpfenden Umhüllung bereits vor der Kabelmontage aufgeschrumpft ist, daß in die Halbschalen im Bereich der Kabeleinführungsöffnungen zwischen den Ausnehmungen für die Kontakt-Käfige und dem Gehäuseinnenraum Vertiefungen zur Einlage von als elastische Ringe mit Zylinder formigen Ansätzen ausgebildeten Dichtungen eingelassen sind, die den Koaxialkabelaußenleiter und das Ende des Dielektrikums zwischen Koaxialkabelinnen- und -außenleiter, und daß auf der/den die Baugruppen im Innern des Gehäuses tragenden Leiterplatte/n axial zu den Kabeleinführungsöffnungen angeordnete, mit Fangtrichtern versehene Federklemmtulpen zur Aufnahme der Koaxialkabelinnenleiter vorgesehen sind.

Aufgabe der Erfindung ist es, einen durch den Oberbegriff des Patentanspruchs 1 näher bezeichneten Kabelverteiler, bzw. -abzweiger so auszugestalten, daß keine aufwendigen Montagearbeiten am Montageort nötig sind und keine Beeinträchtigung des HF-Verhaltens und der Feuchtigkeitsdichtigkeit durch die Montage auftritt.

Diese Aufgabe wird durch die Merkmale im kennzeichnenden Teil des Patentanspruchs 1 gelöst.

In den Unteransprüchen sind vorteilhafte Ausgestaltungen des Kabelverteilers, bzw. -abzweigers angegeben.

Die Vorteile der Erfindung sind insbesondere dadurch gegeben, daß keine Schraubanschlüsse, die einen hohen Montageaufwand bedingen, zur Befestigung und Kontaktierung der Koaxialleiter mehr nötig sind. Der Montageaufwand am Einsatzort beschränkt sich lediglich auf das Einschieben der abisolierten Kabelenden und das Aufschrumpfen der das Gehäuse überragenden Zonen der unter Wärmeeinwirkung schrumpfenden Umhüllung auf die Kabelaußenmäntel. Wie Untersuchungen zeigten, ist der Verbund Kabelmantel/schrumpfende Umhüllung so fest, daß keine zusätzlichen Maßnahmen zur Zugabfangung der Kabel nötig sind. Das bereits vor der Montage mit einer wärmeschrumpfenden Umhüllung überzogene Gehäuse braucht am Montageort nicht mehr geöffnet zu werden.

Anhand der Zeichnungen wird die Erfindung nun näher erläutert. Es zeigen

Figur 1 eine schematische Darstellung des Kabelverbinders, bzw. -abzweigers im Lieferzustand,

Figur 2 einen Detailquerschnitt durch das Gehäuse mit einer Einführungsfederklemmhülse und einer Federklemmtulpe,

Figur 3 einen Kabelverbinder, bzw. -abzweiger im Einbauzustand,

Figur 4 einen Kabelverbinder, bzw. -abzweiger mit einstückigem ungeschlitztem Schrumpfschlauch,

Figur 5 einen Kabelverbinder, bzw. -abzweiger mit geschlitztem Schrumpfschlauch und

Figur 6 einen Kabelverbinder, bzw. -abzweiger mit einem aus zwei Hälften bestehenden wärmeschrumpffähigen Formteil.

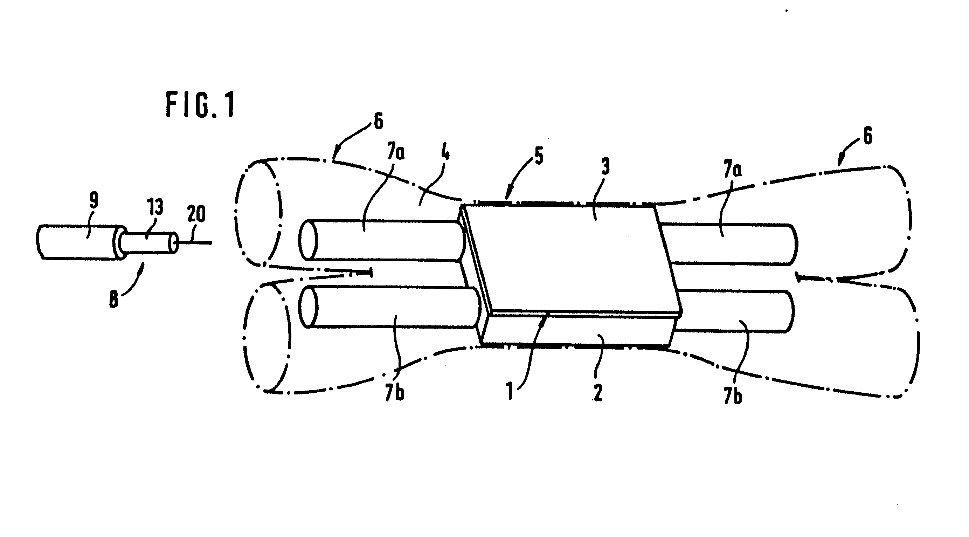

In der schematischen Darstellung des Kabelverbinders, bzw. -abzweigers nach Fig. 1 ist auf das hochfrequenzdichte Gehäuse 1, bestehend aus einer Wanne 2 und einem Klemmdeckel 3, ein wärmeschrumpffähiges Formteil 4 bereits aufgeschrumpft. Im Gegensatz zu der das Gehäuse 1 umgebenden Zone 5 des Formteiles 4 befinden sich die das Gehäuse 1 überragenden Zonen 6 noch im ungeschrumpften Zustand. Pro einzuführendes Koaxialkabel ist dem Gehäuse 1 eine Einführungsfederklemmhülse 7a und 7b zugeordnet. Die Zonen 6 überragen neben dem Gehäuse 1 auch die Einführungsfederklemmhülsen 7a und 7b, damit nach dem Einschieben der abisolierten Kabelenden 8 diese Zonen auf die Kabelaußenmäntel 9 aufgeschrumpft werden können. In Fig. 1 ist ein Kabelabzweiger für ein Durchgangskabel mit den zugehörigen Federklemmhülsen 7a und zwei abzweigenden Kabeln mit den Federklemmhülsen 7b gezeigt. Natürlich kann der Kabelabzweiger auch für mehr als zwei abzweigende Kabel ausgelegt sein und entsprechend mehr jeweils links und rechts vom Gehäuse 1 parallel nebeneinander angeordnete Federklemmhülsen 7 aufweisen.

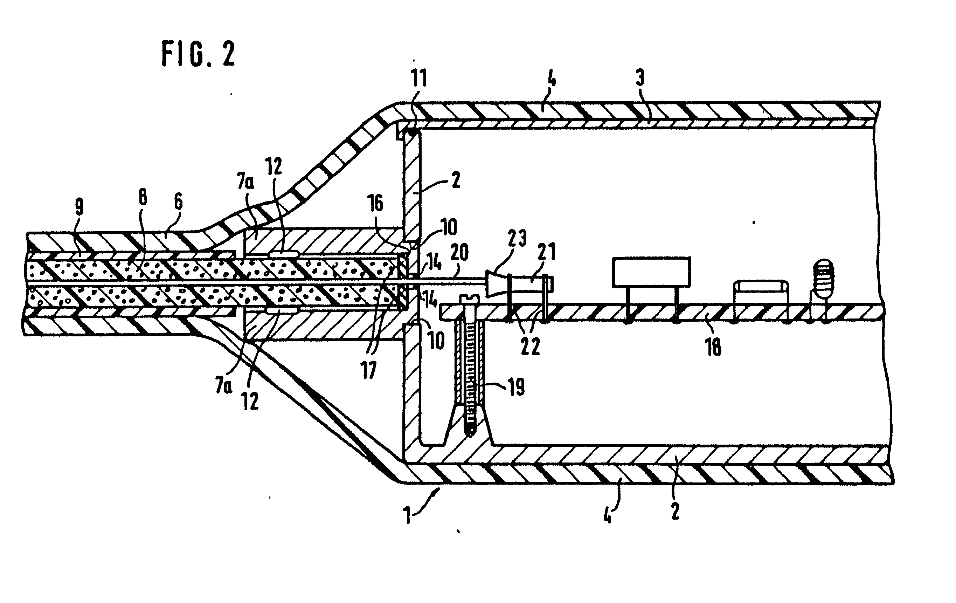

Fig. 2 zeigt einen Detailquerschnitt durch das Gehäuse 1 an der Stelle einer Kabeleinführung. In die Wanne 2 des Gehäuses 1 ragt durch eine senkrechte Wand eine Federklemmhülse 7a. Sie ist über eine Schraubverbindung 10 mit dem Gehäuse 1 verbunden. Anstelle einer Schraubverbindung kann die Federklemmhülse 7a durch einen Preßsitz mit dem Gehäuse 1 verbunden sein. Für die Herstellung als Massenartikel ist es günstiger, die Federklemmhülsen 7a und 7b mit dem Gehäuse 1 zu integrieren. Beispielsweise kann das in Spritzgußtechnik hergestellte Gehäuse 1 Ansätze in Form der Federklemmhülsen 7a und 7b aufweisen. Die Wanne 2 des Gehäuses 1 ist oben mit einem Klemmdeckel 3 hochfrequenz- und feuchtigkeitsdicht abgeschlossen. Ein in den oberen Rand der Wanne eingelassener Dichtring 11 sorgt für den Feuchtigkeitsschutz. Die Wangen des Klemmdeckels 3 überragen die Wanne 2 und werden durch Federdruck gegen ihre Seitenwände gedrückt. Fig. 2 zeigt einen bereits fertig montierten Kabelabzweiger. Ein abisoliertes Kabelende 8 ragt in das Gehäuse 1 und das wärmeschrumpffähige Formteil 4 ist bezüglich der das Gehäuse 1 überragenden Zone 6 schon auf den Kabelaußenmantel 9 aufgeschrumpft. Die Einführungsfederklemmhülse 7a weist in ihrem dem Gehäuseinnenraum abgewandten Bereich lamellenartige Federkörbe 12 auf, deren Zungen auf dem ganzen Umfang gleichmäßig gegen den Koaxialkabelaußenleiter 13 drücken und so den elektrischen Kontakt zum metallisch leitenden Gehäuse 1 herstellen. Der Innendurchmesser der Einführungsklemmhülse 7a ist so gewählt, daß die Zungen des Federkorbes 13 gerade noch ein Einschieben des Außenleiters 13 ohne Verletzung des Außenleitermantels zulassen. Die Federklemmhülse 7a weist in ihrem dem Gehäuseinnern zugewandten Bereich eine Durchmesserverkleinerung 14 auf, die derart gewählt ist, daß der Koaxialkabelinnenleiter 15 ohne Berührung des Gehäuses in den Innenraum einführbar ist. In der Durchmesserübergangszone 16 der Federklemmhülse 7a ist eine Feuchtigkeitsdichtung 17 in Form eines Neopren-Dichtringes eingebracht, die eine Feuchtigkeitsabdichtung in Abzweigerlängsausdehnung bewirkt. Die Feuchtigkeitsabdichtung in Querrichtung wird durch das aufgeschrumpfte Formteil 4 sichergestellt.

Die Eletroknikeinrichtungen zur Signalverteilung befinden sich auf einer oder mehreren Leiterplatten 18 im Innern des Gehäuses. Sie sind beispielsweise durch Verschraubungen 19 fest am Gehäuse 1 verankert. Zur Kontaktierung des Kaxialkabelinnenleiters 20 mit den Elektronikeinrichtungen ist auf der Leiterplatte 18 pro Kabelende eine Federklemmtulpe 21 vorgesehen. Diese kann mit der Leiterplatte 18 beispielsweise über Haltebeine 22 fest verbunden sein. Die Federklemmtulpe 21 ist zentrisch zur Achse der Einführungsfederklemmhülse 7a angeordnet. Zum leichteren Einschieben des Koaxialkabelinnenleiters 20 besitzt die Federklemmtulpe 21 einen Fangtrichter 23.

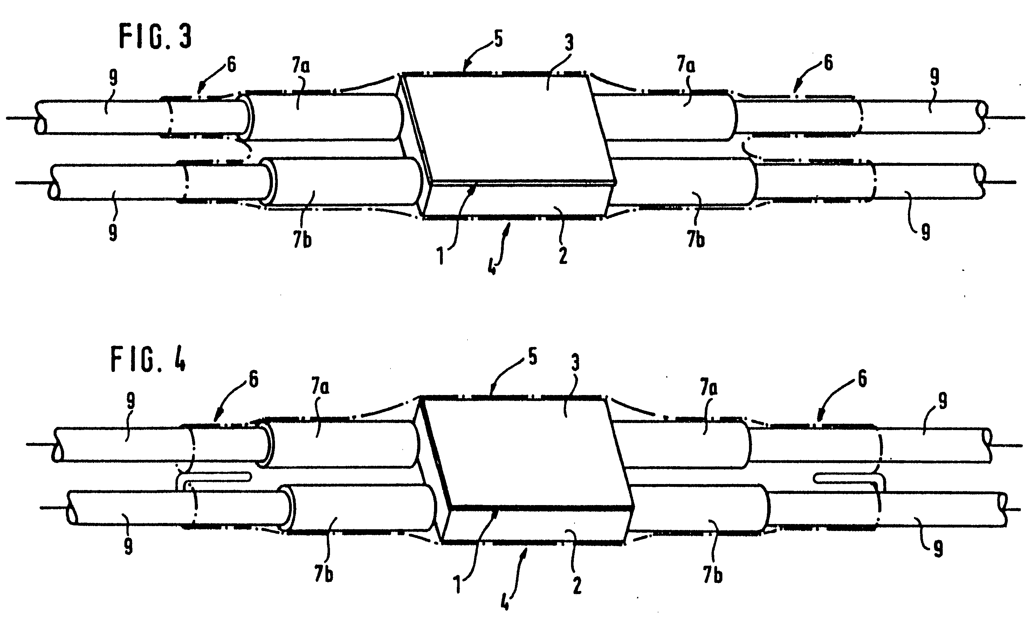

Nachdem die abisolierten Kabelenden 8 durch einfaches Einstekken in die Einführungsklemmhülsen 7a und 7b und die Federklemmtulpen 21 am Montageort mit dem Gehäuse 1 und den auf der Leiterplatte 18 befindlichen Elektronikeinrichtungen kontaktiert sind, werden die das Gehäuse 1 überragenden Zonen 6 auf die Außenmäntel 9 der Kabelenden 8 aufgeschrumpft. Fig. 3 zeigt einen solchen fertig montierten und endgeschrumpften Kabelabzweiger.

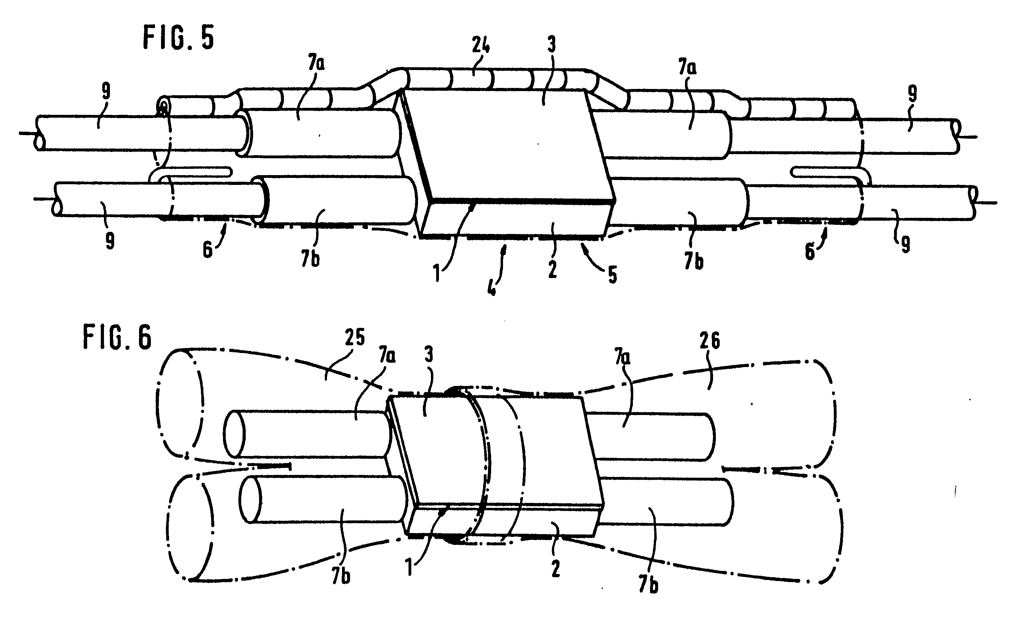

Die weiteren Figuren 4 bis 6 zeigen schematisch verschiedene Ausführungsformen des auf auf das Gehäuse 1 aufgeschrumpften Formteils 4.

In Fig. 4 besteht das Formteil 4 aus einem einstückigen zumindest in der das Gehäuse 1 umgebenden Zone 5 ungeschlitzten Schrumpfschlauch. Dieser Schrumpfschlauch wird im Bereich der Kabelenden 8 bedarfsweise durch Klammern zusammengedrückt, so daß die Schrumpfschlauchenden die Kabelaußenmäntel 9 möglichst allseitig umschließen. Ein auf dem Schrumpfschlauch innenseitig angebrachter Kleber geht mit dem Kabelmantel beim Schrumpfen eine innige starre Verbindung ein, die erst beim Wiederöffnen der Muffe durch Wärmeeinwirkung lösbar ist. Anstelle eines ungeschlitzten Schrumpfschlauches kann, wie Fig. 5 zeigt, ein geschlitzter Schrumpfschlauch verwendet werden. Eine Halteschiene 24 sorgt für den Zusammenhalt des Schrumpfschlauches im Bereich der Längsschlitzung. Für die das Gehäuse 1 überragenden Zonen 6 des Schrumpfschlauches können separate Halteschienen oder die Schienen 24 für die das Gehäuse 1 umgebende Zone 5 verwendet werden.

In Fig. 6 besteht das wärmeschrumpffähige Formteil 4 aus zwei ineinander gesteckten Hälften 25 und 26. Die Trennstelle für die beiden Hälften 25 und 26 befindet sich etwa im mittleren Bereich der Längsausdehnung des Gehäuses 1.

**Patentansprüche**

1. Kabelverteiler, bzw. -abzweiger für Koaxialkabel, bei dem Baugruppen zur Signalverteilung in einem metallischen Gehäuse (1) untergebracht sind, über das ebenso wie über die in das Gehäuse (1) eingeführten Kabelenden (8) eine bei Wärmeeinwirkung schrumpfende Umhüllung aufgebracht ist, wobei sich die das Gehäuses (1) überragenden Zonen (6) der Umhüllung (4) vor der Montage noch im ungeschrumpften Zustand befinden, dadurch gekennzeichnet, daß mit dem Gehäuse (1) pro einzuführendes Kabelende (8) eine Einführungsfederklemmhülse (7a, 7b) starr und elektrisch leitend verbunden ist, deren Innendurchmesser im gespannten Zustand dem Durchmesser des Koaxialkabelaussenleiters (13) eines einzuführenden Koaxialkabels entspricht, daß die Einführungsfederklemmhülsen (7a, 7b) in ihren dem Gehäuseinnenraum abgewandten Bereichen lamellenartige Federkörbe (12) und in ihren dem Gehäuseinnenraum zugewandten Bereichen Durchmesserverkleinerungen (14) aufweisen, derart daß im Bereich der kleineren Durchmesser die Koaxialkabelinnenleiter (15) noch frei hindurchführbar sind, daß in die Durchmesserübergangszonen (16) der Einführungsfederklemmhülsen (7a, 7b) den Koaxialkabelinnenleiter (20) ringförmig umgebende Feuchtigkeitsdichtungen (17) eingebracht sind, und daß sich im Innern des Gehäuses (1) fest verankerte konzentrisch zu den Einführungsfederklemmhülsen (7a, 7b) angeordnete Federklemmtulpen (21) zur Aufnahme der Koaxialkabelinnenleiter (20) befinden.

2. Kabelverteiler, bzw. -abzweiger nach Anspruch 1, dadurch gekennzeichnet, daß die Federklemmtulpen (21) Fangtrichter (23) für die einzuführenden Koaxialkabelinnenleiter (15) aufweisen.

3. Kabelverteiler, bzw. -abzweiger nach Anspruch 1, dadurch gekennzeichnet, daß die wärmeschrumpffähige Umhüllung (4) zumindest in der das Gehäuse (1) umgebenden Zone (5) aus einem ungeschlitzten einstückigen Schrumpfschlauch besteht.

4. Kabelverteiler, bzw. -abzweiger nach Anspruch 1, dadurch gekennzeichnet, daß die wärmeschrumpffähige Umhüllung (4) zumindest in der das Gehäuse (1) umgebenden Zone (5) aus einem längsgeschlitzten einstückigen durch eine Schiene (24) zusammengehaltenen Schrumpfschlauch besteht.

5. Kabelverteiler, bzw. -abzweiger nach Anspruch 1, dadurch gekennzeichnet, daß die wärmeschrumpffähige Umhüllung (4) aus zwei ineinander gesteckten Hälften (25, 26) besteht, die durch das Aufschrumpfen in der das Gehäuse (1) umgebenden Zone (5) fest miteinander verbunden sind, wobei sich die Trennstelle zwischen den beiden Hälften (25, 26) quer zur Längsausdehnung des Kabelverbinders, bzw. -abzweigers befindet.

6. Kabelverteiler, bzw. -abzweiger nach Anspruch 5, dadurch gekennzeichnet, daß sich die Trennstelle zwischen den beiden Hälften (25, 26) etwa im mittleren Bereich der Längsausdehnung des Gehäuses (1) befindet.

7. Kabelverteiler, bzw. -abzweiger nach Anspruch 1, dadurch gekennzeichnet, daß die Einführungsfederklemmhülsen (7a, 7b) mit dem Gehäuse (1) einstückig ausgeführt sind.

8. Kabelverteiler, bzw. -abzweiger nach Anspruch 1, dadurch gekennzeichnet, daß die starre und elektrisch leitende Verbindung zwischen Einführungsfederklemmhülsen (7a, 7b) und Gehäuse (1) über Schraub- oder Preßverbindungen (10) realisiert ist.

**Claims**

1. Cable distributor or cable branching joint, for co-axial cables, in which assemblies for signal distribution are housed in a metallic housing (1), over which as well as over the cable ends (8) introduced into the housing (1) is applied a sheathing shrinking under the effect of heat, wherein those zones (6) of the sheating, which project beyond the housing (1), are before the assembly still disposed in the unshrunk state, characterised thereby, that for each cable end (8) to be introduced, an introduction spring clamping sleeve (7a, 7b), the internal diameter of which in the stressed state corresponds to the diameter of the outer co-axial cable conductor (13) of a co-axial cable to be introduced, is rigidly and electrically conductively connected with the housing (1), that the introduction spring clamping sleeves (7a, 7b) display lamellar spring cages (12) in their regions remote from the interior housing space and diameter reductions (14) in their regions facing the interior housing space in such a manner that the inner co-axial cable conductor (15) are still freely leadable through in the region of the smaller diameters, that moisture seals (17) annularly surrounding the inner co-axial cable conductor (20) are placed in the diameter transition zones (16) of the introduction spring clamping sleeves (7a, 7b) and that tulip-shaped spring clamps (21), which are arranged concentrically with the introduction spring clamping sleeves (7a, 7b), for the reception of the inner co-axial cable conductor (20) are disposed firmly anchored in the interior of the housing (1).

2. Cable distributor or cable branching joint according to claim 1, characterised thereby, that the tulip-shaped spring clamps (21) display catching funnels (23) for the inner co-axial cable conductor (15) to be introduced.

3. Cable distributor or cable branching joint according to claim 1, characterised thereby, that the heat-shrinkable sheathing (4) at least in the zone (5) surrounding the housing (1) consists of a not slit, one-piece stocking house.

4. Cable distributor or cable branching joint according to claim 1, characterised thereby, that the heat-shrinkable sheathing (4) at least in the zone (5) surrounding the housing (1) consists of a longitudinally slit, one-piece stocking hose held together by a rail (24).

5. Cable distributor or cable branching joint according to claim 1, characterised thereby, that the heat-shrinkable sheating (4) consists of two halves (25, 26), which are one plugged into the other and each firmly connected with the other by the shrinking-on in the zone (5) surrounding the housing (1), wherein the separating place between both the halves (25, 26) is disposed transversely to the longitudinal extent of the cable connector or cable branching joint.

6. Cable distributor or cable branching joint according to claim 5, characterised thereby, that the separating place between both the halves (25, 26) is disposed in about the middle region of the longitudinal extent of the housing (1).

7. Cable distributor or cable branching joint according to claim 1, characterized thereby, that the introduction spring clamping sleeves (7a, 7b) are constructed integrally with the housing (1).

8. Cable distributor or cable branching joint according to claim 1, characterised thereby, that the rigid and electrically conductive connection between the introduction spring clamping sleeves (7a, 7b) and the housing (1) is realised through screw or pressure connections (10).

**Revendications**

1. Boîte de répartition ou de dérivation pour câble coaxial, dans laquelle des ensembles pour répartition de signaux sont logés dans un boîtier métallique (1) et dans laquelle, par-dessus la ou les extrémités de câble (8) introduites dans le boîtier (1) est rapportée une enveloppe rétractable sous l'action de la chaleur, étant précisé que les zones (6) de l'enveloppe (4) qui débordent du boîtier (1) se trouvent encore, avant le montage, à l'état non rétracté, caractérisée en ce qu'au boîtier (1), pour chaque extrémité de câble (8) à introduire, est reliée, sans jeu et avec conduction électrique, une douille de serrage élastique d'introduction (7a, 7b) dont le diamètre intérieur, à l'état serré, correspond au diamètre du conducteur extérieur (13) d'un câble coaxial à introduire ; en ce que les douilles de serrage élastiques d'introduction (7a, 7b) présentent, dans leurs zones côté opposé à l'espace intérieur du boîtier, des paniers élastiques du type à lamelles (12) et, dans leurs zones, côté espace intérieur du boîtier, des réductions de diamètre (14), de façon telle que l'on puisse encore introduire librement le conducteur intérieur (15) du câble coaxial dans la zone du plus petit diamètre ; en ce que, dans les zones de transformation du diamètre (16) des douilles de serrage élastique d'introduction (7a, 7b) sont rapportées des garnitures d'étanchéité à l'égard de l'humidité (17) qui entourent, à la façon d'une bague, le conducteur intérieur (20) du câble coaxial ; et en ce qu'à l'intérieur du boîtier (1) se trouvent, pour recevoir le conducteur intérieur du câble coaxial (20), des tulipes de serrage élastique (21) solidement fixées et disposées concentriquement aux douilles élastiques d'introduction (7a, 7b).

2. Boîte de répartition ou de dérivation de câble selon la revendication 1, caractérisée en ce que les tulipes de serrage élastique (21) présentent un entonnoir de réception (23) pour le conducteur intérieur du câble coaxial (15) à introduire.

3. Boîte de répartition ou de dérivation de câble selon la revendication 1, caractérisée en ce que l'enveloppe rétractable à chaud (4) est constituée, au moins dans la zone (5) qui entoure le boîtier (1), d'un tube souple rétractable, d'une pièce et non fendu.

4. Boîte de répartition ou de dérivation de câble selon la revendication 1, caractérisée en ce que l'enveloppe rétractable à chaud (4) est constituée, au moins dans la zone (5) qui entoure le boîtier (1), d'un tube souple rétractable, d'une pièce fendue dans sa longueur et maintenue par un jonc (24).

5. Boîte de répartition ou de dérivation de câble selon la revendication 1, caractérisée en ce que l'enveloppe rétractable à chaud (4) est constituée de deux moitiés (25, 26) enfilées l'une dans l'autre et solidarisées l'une avec l'autre par pose à retrait dans la zone (5) qui entoure le boîtier (1), étant précisé que l'endroit du joint entre les deux moitiés (25, 26) se trouve transversalement à la dimension longitudinale de la boîte de connexion ou de dérivation de câble.

6. Boîte de répartition ou de dérivation de câble selon la revendication 5, caractérisée en ce que l'endroit du joint entre les deux moitiés (25, 26) se trouve à peu près dans la zone médiane de

0 114 244

la dimension longitudinale du boîtier (1).

7. Boîte de répartition ou de dérivation de câble selon la revendication 1, caractérisé en ce que les douilles de serrage élastique d'introduction (7a, 7b) sont exécutées d'une pièce avec le boîtier (1).

8. Boîte de répartition ou de dérivation de câble selon la revendication 1, caractérisée en ce que la liaison sans jeu et électriquèment conductrice entre les douilles de serrage élastique d'introduction (7a, 7b) et le boîtier (1) est réalisée par des liaisons à vis ou à ajustement serré (10).

FIG.1

# FIG. 2

FIG. 3

FIG. 4

FIG. 5

FIG. 6

0 114 244